# EUROPÄISCHE PATENTSCHRIFT

(11) **EP 1 190 244 B1**
(45) Veröffentlichungstag und Bekanntmachung des Hinweises auf die Patenterteilung: **26.02.2003**
(21) Anmeldenummer: 00929552.8
(22) Anmeldetag: 25.05.2000
(51) Int. Cl.: G01N 30/48, B01J 20/28, B01J 20/32, B01D 15/08

(54) **VERFAHREN ZUR HERSTELLUNG MONOLITHISCHER TRÄGERMATERIALIEN**
METHOD OF PRODUCING MONOLITHIC SUPPORT MATERIALS
PROCEDE DE REALISATION DE MATERIAUX SUPPORTS MONOLITHIQUES

(30) Priorität: 31.05.1999 AT 96099
(43) Veröffentlichungstag der Anmeldung: 27.03.2002
(73) Patentinhaber: Buchmeiser, Michael Rudolf, 6020 Innsbruck (AT)
(72) Erfinder: Buchmeiser, Michael Rudolf, 6020 Innsbruck (AT)
(74) Vertreter: Hofinger, Stephan
(86) Internationale Anmeldenummer: EP0004768
(87) Internationale Veröffentlichungsnummer: WO00073782

(56) Entgegenhaltungen:
- WO-A-97/19347
- WO-A-98/03261
- WO-A-98/27423
- US-A- 5 334 310
- SVEC F ET AL: "MOLDED RIGID MONOLITHIC POROUS POLYMERS: AN INEXPENSIVE, EFFICIENT,AND VERSATILE ALTERNATIVE TO BEADS FOR THE DESIGN OF MATERIAL FOR NUMEROUS APPLICATIONS" INDUSTRIAL & ENGINEERING CHEMISTRY RESEARCH,US,AMERICAN CHEMICAL SOCIETY. WASHINGTON, Bd. 38, Nr. 1, 1999, Seiten 34-48, XP000788228 ISSN: 0888-5885

## Beschreibung

Die Erfindung betrifft monolithische Trägermaterialien, die als Trennmaterialien für die Chromatographie geeignet sind, sowie Verfahren zu ihrer Herstellung und ihre Verwendung als Trennmaterialien in der Chromatographie.

Auf dem Gebiet der Trennverfahren sind heutzutage eine Vielzahl verschiedenster Trägermaterialien bekannt. Sie basieren im wesentlichen auf anorganischen Materialien wie Silika, Glas, Alox, Titandioxid etc. oder auf organischen Materialien wie z.B. Polystyrol-Divinylbenzol (PS-DVB) und diversen Acrylaten. Diese Materialien finden in verschiedensten Trenntechniken wie z.B. der High Performance Liquid Chromatography (HPLC), Festphasenextraktion (solid-phase extraction, SPE) und der Kapillarelektrochromatographie (CEC) Anwendung. Hierbei kommen sie meist in Form von sphärischen, monodispersen Teilchen, die unter Anwendung hoher Drücke (bis zu 800 bar) in Säulen gefüllt werden sowie in Form von Membranen oder Monolithen zum Einsatz. Unter Monolithen versteht man in diesem Kontext einen zusammenhängenden, aus einem Stück bestehenden Trennkörper poröser Natur, der durch Polymerisation eines geeigneten Gemisches aus Monomer und Quervernetzer in Gegenwart spezieller Lösungsmittelgemische innerhalb der für die spätere Anwendung notwendige Vorrichtung (Säule,..) entsteht. Es ist bekannt, daß mit monolithischen Trennsäulen der oben angesprochene Packungsvorgang umgangen werden kann und daß diese folgende Vorteile aufweisen:
- Keine Totvolumina innerhalb der Säule, die zu Beeinträchtigunngen der Trennung führen können.
- Totvolumina durch Nachsacken des Säulenmaterials sind nicht mehr möglich.
- Die Flußrichtung beim Trennvorgang monolithischer Materialien ist im Gegensatz zu den meisten kommerziell erhältlichen Trennmaterialien nicht entscheidend.
- Die Trennqualität der HPLC-Säule ist abhängig vom Teilchendurchmesser, der Teilchenporosität und von der Teilchengestalt. Je kleiner die Teilchen, desto größer ist die spezifische Oberfläche (ausgedrückt in m²/g) und desto besser ist die Trennleistung. Kleine Teilchendurchmesser führen zu hohen Gegendrücken. Eine gängige HPLC-Anlage kann bis zu ca. 320 bar betrieben werden. Die Verwendung von Trennmaterialien mit Teilchendurchmessern unter 5 µm ist somit äußerst schwierig. Monolithische Trennmaterialien haben aufgrund ihrer makroporösen Struktur extrem niedrige Gegendrücke, was Flüsse von bis zu 20 ml/min zuläßt.
- Monolithische Trennmaterialien weisen einen sehr guten Massentransport auf, sodaß sie auch bei hohen Flüssen betrieben werden können, was sehr schnelle Trennung ermöglicht.

Generell sind monolithische Trennmaterialien auf PS-DVB (Polystyrol-Divinylbenzol)-, 4-Vinylpyridin-DVB-, Acrylat- sowie auf Silikabasis bekannt. Sie werden durch thermisch induzierte radikalische Polymerisation bei erhöhter Temperatur (70 - 90°C) hergestellt. Eine Derivatisierung ist jedoch nicht oder nur sehr schwer möglich.

Die Herstellung von Trägermaterialien mittels Ring-Öffnungs-Metathesepolymerisation (ROMP) wurden bereits beschrieben (M.R. Buchmeiser, G. K. Bonn, AT404 099 (181296); M. R. Buchmeiser, F. Sinner, R. Tessadri, G.K. Bonn, AT 405056 (010497); M. R. Buchmeiser, R. Tessadri, A 1132/97 (020797); M. R. Buchmeiser, F. Sinner A 604/99 (070499)). Zur Herstellung dieser neuartigen Trennmaterialien wurden einerseits vorgefertigte sphärische oder gebrochene Trägermaterialien modifiziert (Coaten von funktionellen Präpolymeren bzw. durch Aufgraften von funktionellen Monomeren auf vorbehandelte Trägermaterialien) oder funktionelle Präpolymere durch anschließende Quervernetzung aus Lösung ausgefällt (Fällungspolymerisation). Allen Verfahren gemeinsam ist die Herstellung oder Verwendung von isolierten Teilchen, deren Teilchendurchmesser sich in einem Bereich von 2-60 µm bewegt.

Die Aufgabe der Erfindung ist die Bereitstellung von monolithischen Trägermaterialien mit verbesserten Eigenschaften. Die Aufgabe wird gelöst durch die Herstellung von monolithischen Trägermaterialien mittels Metathesepolymerisation.

Gegenstand der Erfindung sind monolithische Trägermaterialien erhältlich durch folgende Verfahrensschritte:
a) Bereitstellen eines formgebenden Gefäßes;
b) kovalente Bindung einer der Metathesepolymerisation zugänglichen Gruppe an besagtes formgebendes Gefäß;
c) Aufpolymerisation in Gegenwart von Porenbildner mittels eines Metatheseinitiators von der Metathesepolymerisation zugänglichen Monomeren und Quervernetzern auf das nach Schritt b) derivatisierte formgebende Gefäß.

Gegenstand der Erfindung sind auch monolithische Trägermaterialien, die zusätzlich funktionelle Monomere enthalten. Gegenstand der Erfindung sind ferner Verfahren zur Herstellung der monolithischen Trägermaterialien. Gegenstand der Erfindung ist schließlich die Verwendung der erfindungsgemäßen monolithischen Trägermaterialien als Sorbens für chromatographische Trennungen und als Sorbens bei chromatographischen Trennverfahren.

Unter chromatographischen Trennverfahren werden zusammenfassend Trennverfahren, bei denen die Trennung auf dem Transport des Analyten in einer mobilen Phase beruht, verstanden; Beispiele solcher Trennverfahren sind High Performance Liquid Chromatography (HPLC), Festphasenextraktion (solid-phase extraction, SPE) und der Kapillarelektrochromatographie (CEC).

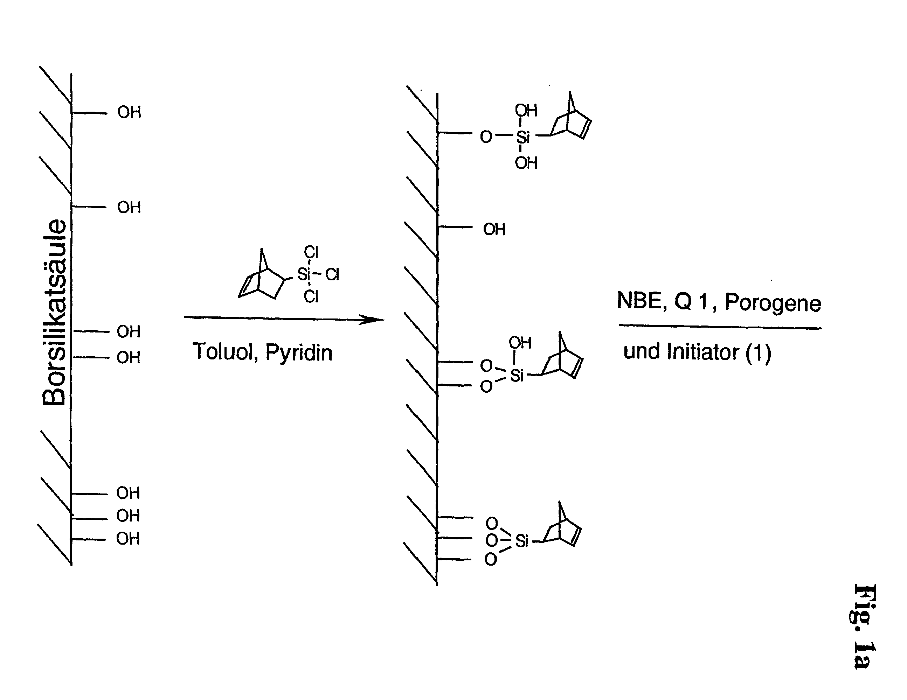

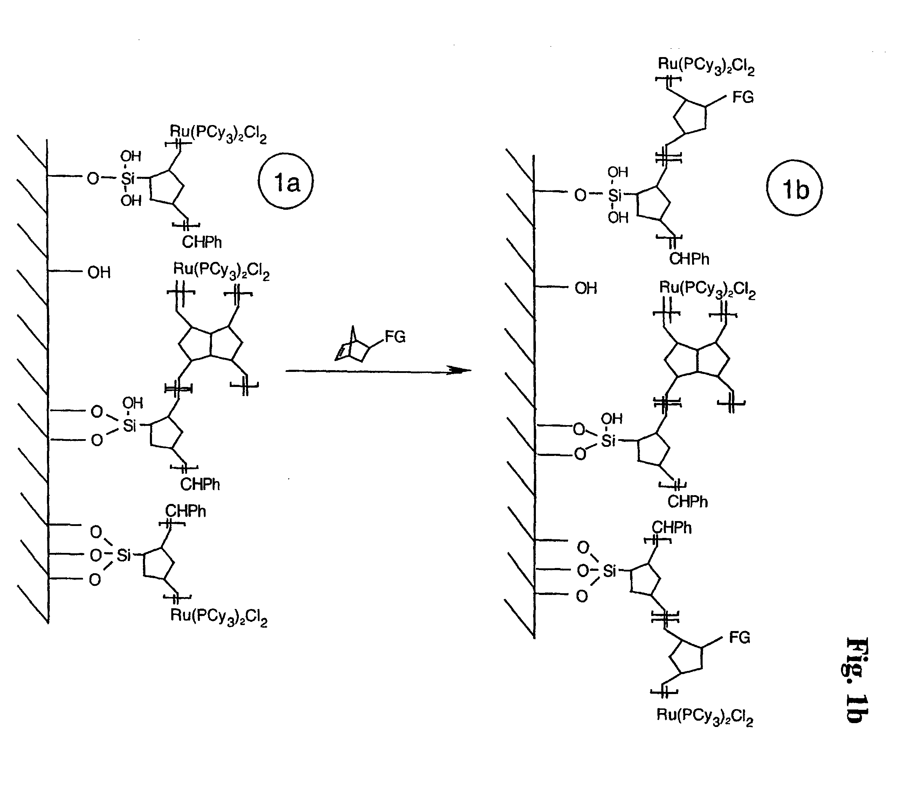

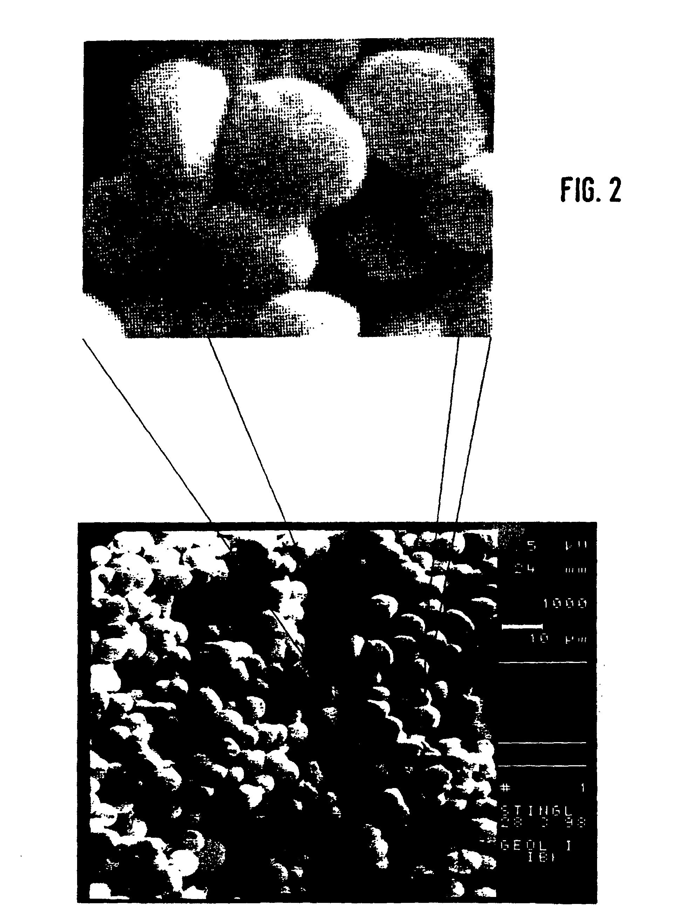

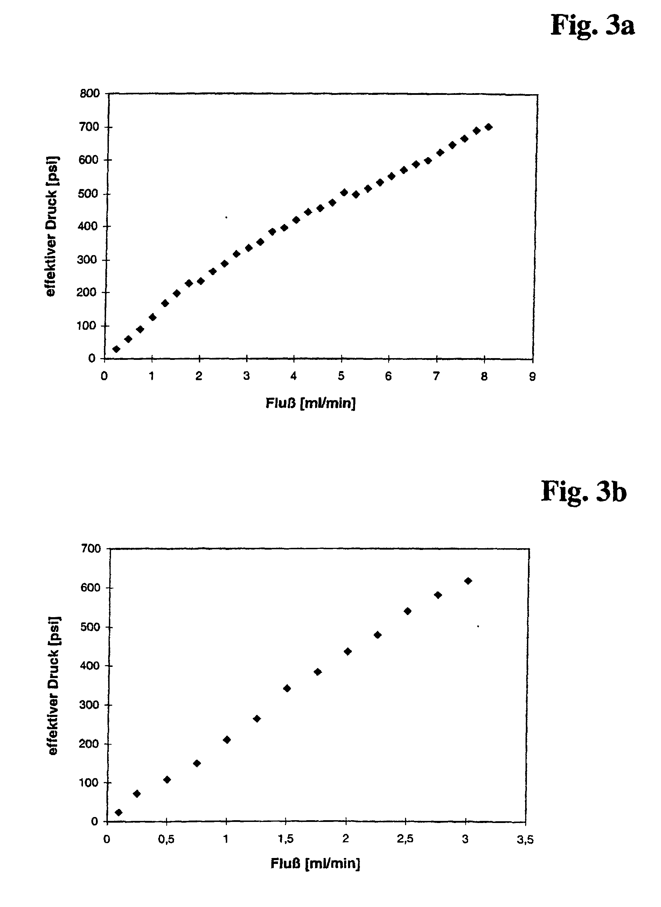

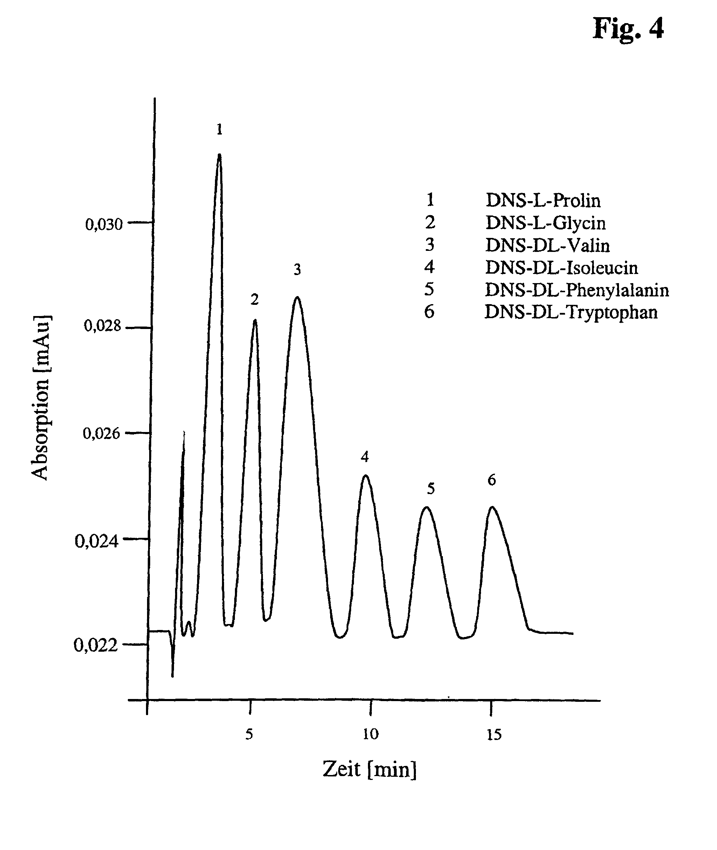

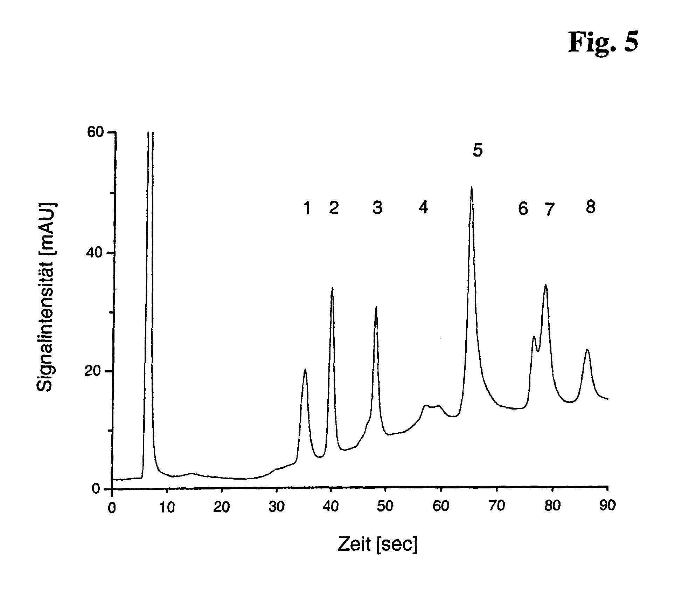

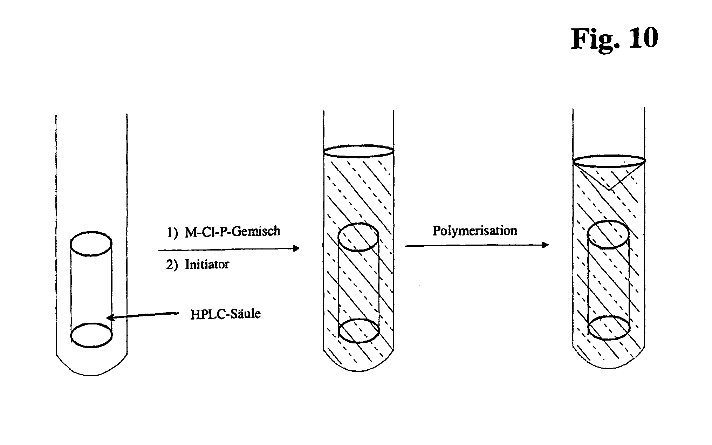

In Figur 1 wird beispielhaft das erfindungsgemäße Verfahren zur Herstellung von monolithischen Trägermaterialien dargestellt. In Figur 2 ist eine elektronenmikroskopische Aufnahme eines Monolithen dargestellt; experimentelle Einzelheiten finden sich in Beispiel A5. In Figur 3 sind Fluß-Druck-Kurven für zwei Monolithen dargestellt; experimentelle Einzelheiten siehe Beispiel B1. In Figur 4 ist die Trennung von dansylierten Aminosäuren dargestellt; experimentelle Einzelheiten siehe Beispiel B2. In den Figuren 5 bis 9 sind Trennungen von verschiedenen Analyten dargestellt; experimentelle Einzelheiten siehe Beispiele B3 bis B7. In Figur 10 ist das experimentelle Vorgehen bei der Herstellung der Monolithen schematisch dargestellt.

Die vorliegende Erfindung offenbart die Herstellung neuer monolithischer Trägermaterialien mittels Metathesepolymerisation bei tiefer Temperatur. Diese Trägermaterialien können zusätzlich in einem weiteren Schritt unter Anwendung der "*in-situ*" Derivatisierung im Zuge des Herstellungsprozesses gezielt und reproduzierbar funktionalisiert werden. Auf diese Weise sind Trägermaterialien mit verbesserten Eigenschaften zugänglich.

Zur Herstellung dieser neuartigen monolithischen Trennmaterialien wird das für die Polymerisation verwendete formgebende Gefäß in solcher Weise vorbehandelt, daß an seiner Innenwand polymerisierbare Gruppen **G** (z.B. einem Norborn-2-en, einem Norbornadien, ect.) kovalent gebunden vorliegen. Diese können im Falle von Borsilikatsäulen mittels Silanisierung z.B. durch Umsetzung mit Norborn-2-en-5-trichlorsilan angebunden werden. In die Innenwände von Säulen aus anderen Materialien, beispielsweise aus styrolhaltigen Polymeren, können ebenfalls nach dem Fachmann bekannten Verfahren (z.B. Brommethylierung und anschließende Umsetzung mit Norborn-2-en-5-ylmethoxiden) polymerisierbare Gruppen G eingeführt werden. Weitere Varianten erschließen sich dem Fachmann auf der Grundlage der beschriebenen Beispiele. Besonders bevorzugt unter den einer Metathesepolymerisation zugänglichen Gruppe sind Verbindungen, die sich von Norborn-2-enen, Norbornadienen, 7-Oxanorborn-2-enen, Alkinen, Cyclobutenen, Cyclopentenen, Dicyclopentadienen, Cyclooctenen, Cyclooctadienen, Cyclooctatrienen oder Cyclooctatetraenen ableiten.

Auf die der Metathesepolymerisation zugängliche Gruppe G wird in einem weiteren Syntheseschritt ein der Metathesepolymerisation zugängliches Monomer M auf die Wandoberfläche aufpolymerisiert, dabei können auch Mischungen dieser Monomeren eingesetzt werden. Bevorzugte Monomere M sind Dicyclopentadien, Norbornadien, Hexahydrodimethanonaphthalin, Decahydrotrimethanoanthracen, Norborn-2-en, Cycloocten, Cyclooctadien, Cyclooctatrien und Cyclooctatetraen.

Für die Polymerisation werden die dem Fachmann bekannten und für die jeweiligen Monomeren anwendbaren Metatheseinitiatoren herangezogen. Zu den für die Metathesepolymerisation geeigneten Initiatoren gehören unter anderem auch viele der bekannten Ziegler-Natta-Katalysatoren. Die erfindungsgemäß durch Metathesepolymerisation hergestellten Materialien können durch diesen synthetischen Ansatz mit hoher Definiertheit und Reproduzierbarkeit hergestellt und gegebenenfalls auch derivatisiert werden. Bevorzugte Initiatoren sind die Verbindungen Cl₂Ru(PCy₃)₂(=CHC₆H₅) (Ph = phenyl, Cy = cyclohexyl) (**1**) und Cl₂Ru(PPh₃)₂(=CHC₆H₅) (Ph = phenyl) (**2**).

Als Quervernetzer dienen bi- oder mehrfunktionale der Metathesepolymerisation zugängliche Verbindungen, insbesondere 1,4,4a,5,8,8a-Hexahydro-1,4,5,8-*exoendo*-dimethano-naphthalin (Q I) sowie 1,4a,5,8,8a,9,9a,10,10a-Decahydro-1,4,5,8,9,10-trimethano-anthracene (Q II).

Durch Auspolymerisieren eines Gemisches aus Monomer **M**, Quervernetzer **Q** und Porogenen **P** (es handelt sich hierbei um spezielle Lösungsmittelgemische, siehe unten, Struktur des Monolithen) in solch vorbehandelten Gefäßen entsteht die monolithische Gerüststruktur, die kovalent an die Innenwand des formgebenden Gefäßes gebunden vorliegt (siehe Abbildung 1). Durch die Variation des Porogen-Monomer-Quervernetzer-Gemisches, der Temperatur, des verwendeten Monomers M, des Quervernetzers **Q** und des Porogens **P** kann die Morphologie des Gerüstkörpers gesteuert werden, wodurch sphärische, clusterartige Teilchenstrukturen mit Durchmessern von 0,6 µm bis zu 10 µm erzielbar sind.

Als Porogen sind insbesondere organische Lösungsmittel wie z.B. iso-Propanol oder Toluol, sowie deren Mischungen geeignet. Dabei wirken beispielsweise iso-Propanol als Makroporogen, Toluol als Mikroporogen. Weitere Porogene sind dem Fachmann im Zusammenhang mit anderen Polymerisationsreaktionen bekannt.

Da die verwendeten metatheseaktiven Katalysatoren eine "lebende" Polymerisation erlauben, liegt nach Beendigung der Polymerisation ein Teil des noch aktiven Katalysators an der Monolithoberfläche gebunden vor. Durch anschließende Beschickung des Monolithen mit einer Lösung des gewünschten funktionellen Monomers **F** wird dieses auf die Oberfläche des Monolithen aufpolymerisiert (siehe Abbildung 1). Diese Monomeren F enthalten in der Regel Gruppierungen oder Substituenten, die die Grundlage für die chromatographische Trennungen bilden; zu diesen sogenannten Separationseffektoren gehören beispielsweise hydrophobe Gruppen für die reversed-phase- (RP-) oder die hydrophobe Interaktionschromatographie (HIC), oder auch ionische Gruppen für die Ionenaustauschchromatographie, oder chelatbildende Gruppen für die Metallchelatchromatographie, chirale Gruppen für die chromatographische Enantiomerentrennung, oder auch Affinitätsliganden für die Affinitätschromatographie. Ausführungsformen für Separationseffektoren sind dem Fachmann bekannt. Anstelle von Monomeren F, die bereits solche Separationseffektoren enthalten, können auch Monomere F eingesetzt werden, in die nach der Polymerisation durch polymeranaloge Umsetzungen die Separationseffektoren eingeführt werden. Ein Beispiel für derartige polymeranalogen Umsetzungen ist die Reaktion von epoxidhaltigen Monomereinheiten mit n-Octanol zu einem für die HIC brauchbaren Trennmaterial. Weitere geeignete polymeranaloge Umsetzungen, sowie geeignete Separationseffektoren sind dem Fachmann bekannt und in der Literatur beispielsweise EP 0 320 023 oder WO 98/03 242 beschrieben.

Bevorzugte Beispiele für funktionelle Monomere F leiten sich von folgenden Verbindungen ab: einfach (Rest = A) oder doppelt (Reste = A und B) substituierte Norborn-2-ene, 7-Oxanorborn-2-ene, Norbornadiene, Alkine, Cyclobutene, Cyclopentene, Dicyclopentadiene, Cyclooctene, Cyclooctadiene, Cyclooctatriene, Cyclooctatetraene, Hexahydrodimethanonaphthaline und Decahydrotrimethanoanthracene, wobei A und B getrennt oder miteinander verbunden sein können und Wasserstoff, eine C₁-C₁₈-Alkyl, C₁-C₁₈-Alkyloxy-, Aryl-, Aryloxy, C₁-C₁₈-Alkenyl-, C₁-C₁₈-Arylalkyl, C₁-C₁₈-Alkylaryl-, C₁-C₁₈-Arylalkenyl-oder eine Halogengruppe, C₁-C₁₈-Hydroxyalkyl, (poly)-Hydroxyphenyl, C₁-C₁₈-Hydroxyalkylaryl, C₁-C₁₈-Aminoalkyl, (C₁-C₁₈)-mono- oder di-(C₁-C₁₈-Alkyl)aminoalkyl, C₁-C₁₈-Cyanoalkyl, Cyanoaryl sowie eine Carboxylat- C₁-C₁₈- Alkylcarboxylat, C₁-C₁₈-Alkylcarboxyl, N,N-Dipyridylamin, N-C₁-C₁₈-Alkyl-N,N-dipyridylamin, N,N-Dipyridylcarbamid oder C₁-C₁₈-Alkyl-N,N-dipyridylcarbonsäureamid bedeuten können. Besonders bevorzugt sind N-subsituierte 7-Oxanorbom-2-en-5,6-dicarbonsäureimide, 7-Oxanorborn-2-en-5,6-dicarbonsäureamide, Norborn-2-en-5-carbonsäureamide und Norborn-2-en-5,6-dicarbonsäureimide sowie als Reste A oder B eine Carboxylat-sowie eine N-Carbonylaminosäure. Weitere Beispiele sind: einfach substituierte Alkine, einfach oder doppelt substituierte Norborn-2-ene, 7-Oxanorborn-2-ene, Norbornadiene, Cyclobutene, Cyclopentene, Dicyclopentadiene, Cyclooctene, Cyclooctadiene, Cyclooctatriene und Cyclooctatetraene, wobei diese Verbindungen mit einer oder mehreren C₁-C₁₈-Alkyl-, C₁-C₁₈-Alkyloxy-, Aryl-, Aryloxy-, C₁-C₁₈-Alkenyl-, C₁-C₁₈-Arylalkyl-, C₁-C₁₈-Alkylaryl-, C₁-C₁₈-Arylalkenylgruppe oder mit Halogen, einer C₁-C₁₈-Hydroxyalkyl-, (poly)-Hydroxyphenyl-, C₁-C₁₈-Hydroxyalkylaryl-, C₁-C₁₈-Aminoalkyl-, (C₁-C₁₈)-mono- oder di-(C₁-C₁₈-Alkyl)aminoalkyl-, C₁-C₁₈-Cyanoalkyl-, Cyanoaryl- oder eine Carboxylat- C₁-C₁₈- Alkylcarboxylat-, C₁-C₁₈-Alkylcarboxyl-, N,N-Dipyridylamin-, N-C₁-C₁₈-Alkyl-N,N-dipyridylamino-, N,N-Dipyridylcarbamido- oder eine C₁-C₁₈-Alkyl-N,N-dipyridylcarbonsäureamid-Gruppe substituiert sein können. Als Substituenten sind insbesondere eine Carboxylat-, eine N-Carbonylaminosäure, eine N-Carbonyldipyridylamino oder eine Dipyridylamido-Gruppe sowie N-subsituierte 7-Oxa-norborn-2-en-5,6-dicarbonsäureimido-, 7-Oxanorborn-2-en-5,6-dicarbonsäureamido-, Norborn-2-en-5-carbonsäureamido- und Norborn-2-en-5,6-dicarbonsäureimid-Gruppen besonders bevorzugt. Weiterhin sind Gruppierungen F besonders bevorzugt, deren Substituent eine chirale Gruppe (z. B. ein Aminosäure-Derivat, ein Cyclodextrin oder ein Polysaccharid), eine chelierende Gruppe (z. B. ein Hydroxychinolin), ein Hapten, ein Protein, ein Glycoprotein (z. B. Vancomycin) oder ein Enzym zur Antigen-Antikörper Reaktion ist.

Durch die Wahl und Konzentration des funktionellen Monomers **F** kann die Kapazität und Art der Derivatisierung reproduzierbar gesteuert werden. Dabei können auch Mischungen verschiedener funktioneller Monomere F eingesetzt werden.

Wie bei jeder Vinylpolymerisation tritt auch bei der Metathesepolymerisation Schrumpfung während des Polymerisationsprozesses auf (siehe Figur 10). Bei der Monolithherstellung ist der Einsatz von Norbornen von großem Vorteil, da Norbornen geringe Schrumpfung aufweist (2-5 %). Schrumpfung tritt in radialer als auch longitudinaler Richtung auf. Zur Verhinderung radialer Schrumpfung, die zur Ablösung des Monolithen von der Innenwand führen würde, werden formgebende Gefäße mit polymerisierbaren Einheiten **G** an der Innenwand verwendet. Durch Einpolymerisation dieser Gruppen G kommt es zur kovalenten Bindung des Monolithen an das formgebende Gefäß. Longitudinale Schrumpfung innerhalb des Trennmediums kann durch den Herstellungsprozeß unterbunden werden. Die Polymerisationslösung wird in ein Reaktionsgefäß, welches das formgebende Gefäß enthält, in solcher Weise eingefüllt, daß die Reaktionslösung um ca. 1 cm über den oberen Rand des formgebenden Gefäßes reicht. Die eintretende Schrumpfung findet außerhalb des Trennmediums statt, der Monolith füllt das formgebende Gefäß vollständig aus (siehe Abbildung 10). Bei Kapillaren können durch einfaches Abschneiden der Enden ideal gefüllte, monolithische Trennmedien erhalten werden.

Die erfindungsgemäß funktionalisierten Trägermaterialien werden insbesondere als Träger- und Trennmaterialien für Trennverfahren (insbesondere für Gas- und Flüssigchromatographie, Kapillarelektrophorese, Kapillarelektrochromatographie, Festphasenextraktion, Anreicherung von Metallen, Luft- und Abwasserreinigung) verwendet.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die vollständige Offenbarung aller vor- und nachstehend aufgeführten Anmeldungen, Patente und Veröffentlichungen, sowie der korrespondierenden Anmeldung AT A960/99, eingereicht am 31.05.1999, sind durch Bezugnahme in diese Anmeldung eingeführt.

### Beispiele

Im folgenden sind zusammenfassend Herstellungsverfahren dargestellt; Einzelheiten sind ebenso wie exemplarische Trennergebnisse in den Einzelbeispielen beschrieben.

Es bedeuten:
GPC = Gelpermeationschromatographie
IR = Infrarotspektroskopie; ν = Wellenzahl (cm⁻¹)
PS-DVB = Polystyrol-Divinylbenzol
NBE = Norbornen
Q = Quervernetzer
P = Porogen

### Experimentelles

**I. Synthetischer Teil** Alle Experimente wurden, falls nicht ausdrücklich anders erwähnt, mit Standard Schlenk Technik unter strengem Luft- und Feuchtigkeitsausschluß durchgeführt. Tetrahydrofuran (THF) p.a und Toluol ÖAB wurden unter Argon von Natrium-Benzophenonketyl abdestilliert. Dichlormethan, Isopropanol p.a., Ethanol 100% und Pyridin wurde von CaH₂ unter Argon abdestilliert, N,N-DMF (N, N,-Dimethylformamid) wurde über Molekularsieb (4Å) getrocknet. Käufliche Edukte bzw. Chemikalien sowie HPLC-Laufmittel wurden ohne weitere Reinigung eingesetzt. Andere Edukte und die Initiatoren, Cl₂Ru(PCy₃)₂(=CHC₆H₅) (Ph = phenyl, Cy = cyclohexyl) (**1**), Cl₂Ru(PPh₃)₂(=CHC₆H₅) (Ph = phenyl) (**2**) wurden nach Literaturangaben (P. Schwab, R. R. Grubbs, J. W. Ziller, *J. Am. Chem. Soc.* **1996,** *118*, 100-110.) synthetisiert und mittels NMR auf ihre Reinheit hin überprüft.

Alle verwendeten Chemikalien waren - wenn nicht gesondert vermerkt - von p.a. Qualität. Zwischenprodukte und Produkte wurden mittels DC und NMR auf ihre Reinheit hin überprüft. Resultierende metallorganische Initiatoren und Carbonsäurechloridderivate wurden unter Argon bei 4°C lichtgeschützt gelagert. Alle Laufmittel für die Chromatographie waren von HPLC-Qualität, oder es wurde Reinstwasser (< 18 MΩ) verwendet. Laufmittel wurden mit Helium 5.0 entgast. Für alle synthetischen Arbeiten wurde deionisiertes Wasser eingesetzt.

*endo*-Norborn-2-en-5-carbonsäurechlorid, (F. Sinner, M. R. Buchmeiser, R. Tessadri, M. Mupa, K. Wurst, G. K. Bonn, J. Am. Chem. Soc. 120, 2790 (1998)), *endo,endo*-7-Oxanorborn-2-en-5,6-dicarbonsäureanhydrid (**6**) [2][3][4],[5], *exo,exo*-N-Phenyl-7-oxanorborn-2-en-5,6-dicarbonsäureimid (**7**) [5][6][7], N-(4-Hydroxyphenyl)-maleinsäureimid [5][8], *exo,exo*-N-(4-Hydroxyphenyl)-7-oxanorborn-2-en-5,6-dicarbonsäureimid (**8**) [5][9], N-(4-N,N-Dimethylaminophenyl)-maleinsäureimid, [5] *endo*/*endo*-Norborn-2-en-5,6-dicarbimid-L-valin-m-nitroanilid (**10**) [10], *exo,exo*-N-(4-(N,N-Dimethylaminophenyl))-7-oxanorborn-2-en-5,6-dicarbonsäureimid (**9**) [5],. 1,4,4a,5,8,8a-Hexahydro-1,4,5,8-exo-endo-dimethanonaphthalin (Cl-1) [11] und endo,endo-norborn-2-en-5,6-dicarbonsäure (**11**), *endo*/*exo*-7-Oxanorborn-2-en-5-carbonsäure (**12**) [12][5] wurden nach Literaturangaben synthetisiert wurden nach den in der Literatur beschriebenen Methoden synthetisiert.

**II. Analytischer Teil** Die IR-Spektren wurden auf einem Midac FT-IR aufgenommen. Die Bestimmung der spezifischen Oberflächen wurde mittels GPC in THF unter Verwendung eines 717 Autosamplers, eines Säulenofens (35 °C), einer 510 HPLC Pumpe, eines 490E UV-Detektors, eines 410 RI Detektors und eines Millenium work package (alles Waters) nach Literaturangaben durchgeführt (I. Halász, K. Martin, *Angew. Chemie,* **1978** *90,* 954-961). Titrationen wurden mit Hilfe eines 665 Dosimats, eines 686 Titroprozessors (Metrohm, Schweiz) und einer LIQ-Plast-Elektrode (Hamilton, Bonaduz, Schweiz) durchgeführt. β-Cyclodextrin wurde in Toluol mittels einer Dean-Stark Apparatur getrocknet. HPLC Trennungen wurden auf einem Water LC-1 Modul plus (UV-Detektion, λ = 254 nm) und eines Water 600 S Controller System (484 UV-Detektor) aufgenommen. Für alle chromatographischen Versuche wurden Gradient Grade Laufmittel verwendet. Probenkonzentrationen betrugen 20 ppm, Injektionsvolumina 5 µl und die Detektionswellenlänge 254 nm. Es wurden HPLC-Borsilikatsäulen (50 x 3 mm, 150 x 3 mm und 250 x 3 mm i.d., Omnifit, Cambridge, England) verwendet.

Spezifische Monolithenoberflächen wurden mittels inverser Ausschluß-Chromatographie (GPC) ermittelt. [13]

### III. Generelles Herstellungsverfahren

### Silanisierung

Borsilikatsäulen wurden wahlweise mittels 5 %-iger HF-Lösung über Nacht angeätzt oder mittels konzentrierter ethanolischer KOH-Lösung vorbehandelt. Es wurde mit Wasser gewaschen und 2 h auf 90°C erwärmt. Nach Abkühlung wurde eine Lösung aus Norborn-2-en-5-trichlorsilan, Toluol und Pyridin (molares Verhältnis 1:2:3) in die HPLC-Säulen gefüllt und über Nacht bei 60°C gehalten. Es wurde mit Aceton, Wasser, Ethanol und trockenem Ethanol gewaschen und am Hochvakuum getrocknet.

### Derivatisierung der Innenwand der formgebenden Gefäße und Polymerisation

Zur Verhinderung radialer Schrumpfung, die zur Ablösung des Monolithen von der Innenwand führen würde, werden formgebende Gefäße mit polymerisierbaren Einheiten **G** an der Innenwand verwendet. Durch Einpolymerisation dieser Gruppen G kommt es zur kovalenten Bindung des Monolithen an das formgebende Gefäß. Longitudinale Schrumpfung innerhalb des Trennmediums kann durch den Herstellungsprozeß unterbunden werden. Die Polymerisationslösung wird in ein Reaktionsgefäß, welches das formgebende Gefäß enthält, in solcher Weise eingefüllt, daß die Reaktionslösung um ca. 1 cm über den oberen Rand des formgebenden Gefäßes reicht. Die eintretende Schrumpfung findet außerhalb des Trennmediums statt, der Monolith füllt das formgebende Gefäß vollständig aus (siehe Abbildung 10). Bei Kapillaren können durch einfaches Abschneiden der Enden ideal gefüllte, monolithische Trennmedien erhalten werden.

### Nicht funktionalisierte monolithische Trennmedien

In separaten Schlenkgefäßen wurde der Mikroporenbildner mit dem Katalysator (Lösung 1) und der Makroporenbildner mit dem Norbornen und mit dem Quervernetzer (Lösung 2) vereinigt. Zur Verhinderung jeglicher spontaner Polymerisation der Lösung 2 wurde zuerst der Quervernetzer mit dem Makroporenbildner vermischt. Die Lösung wurde für 15 Minuten gekühlt und anschließend Norbornen zugegeben. Lösung 1 und 2 wurden auf 0°C (Monolith 1-9+11) bzw -20°C (Monolith 10+12-17) gekühlt, vereinigt und sofort in die vorgekühlte HPLC-Säule überführt, die sich in einer ebenfalls gekühlten Eprouvette befand. Die Eprouvette wurde für 20 Minuten auf 0°C gehalten und anschließend auf Raumtemperatur erwärmt (Abbildungen 1 und 10).

### Funktionalisierte Monolithen

Die Herstellung der Monolithen 18-23 erfolgte wie für Monolith 4 beschrieben, wobei jedoch die Leersäule auf -70 °C vorgekühlt wurde. An die Herstellung schloß sich die "*in-situ*"-Derivatisierung an. Nach 1 h Polymerisationszeit (ab Vereinigung der Lösungen gerechnet) wurde die Eprouvette zerschlagen und die HPLC-Säule mit 1 ml Methylenchlorid gespült. Der Monolith wurde mit einer 10-gewichtsprozentigen Methylenchloridlösung des funktionellen Monomers beschickt und über Nacht auf 60°C gehalten. Es wurde mit 2 ml Methylenchlorid gespült.

### A Herstellungsbeispiele

### Beispiel A1: Silanisierung der Borsilikat HPLC-Säulen

Borsilikatsäulen (50 x 3 mm I.D., 100 x 3 mm I.D., 150 x 3 mm I.D., Omnifit, Cambridge, England und 100 x 3 mm I.D. Chrompack) wurden über Nacht mit gesättigter ethanolischer KOH angeätzt und anschließend mit destilliertem Wasser ausgiebig gespült. Es wurde bei 90°C für 2 h getrocknet und mit einer Mischung aus Pyridin/ToluolBicyclo[2.2.1]hept-2-en-5-yl-trichlorsilan (molares Verhälnis 3:2:1) bei 60°C über Nacht silanisiert. Die Leersäulen wurden mit Aceton, destilliertem Wasser und Ethanol gewaschen und am Hochvakuum bei Raumtemperatur getrocknet.

### Beispiel A2: Silanisierung von µ-HPLC-Kapillaren

Silikakapillaren (⌀=200 µm I.D., Photonetics, Kehl, Deutschland) wurden mittels 1 molarer NaOH angeätzt (RT; 5 min) und anschließend mit destilliertem Wasser ausgiebig gespült. Die Kapillaren wurde bei 90°C für 2 h getrocknet und mit einer Mischung aus Pyridin/Toluol/Bicyclo[2.2.1]hept-2-en-5-trichlorsilan (molares Verhälnis 3:2:1) bei 60°C über Nacht silanisiert. Die Kapillaren wurden mit Aceton, destilliertem Wasser und Ethanol gewaschen und am Hochvakuum bei Raumtemperatur getrocknet.

### Beispiel A3: Herstellung nicht-funktionalisierter Monolithen

Es wurden zwei Polymerisationsmischungen hergestellt. Polymerisationslösung A enthielt ein Makroporogen (z.B. 2-Propanol), Norbornen und den Quervernetzer; Polymerisationslösung B das Mikroporogen (z.B. Toluol) und den Initiator. Beide Lösungen wurden auf die angegebenen Polymerisationstemperaturen (Tₚ) gekühlt und vereinigt. Es wurde wenige Sekunden gerührt und die Polymerisationslösung sogleich mittels einer Spritze in die silanisierten HPLC-Säulen überführt, die sich in Eprouvetten mit geringfügig größeren Innendurchmessern befanden. Hierbei wurde darauf geachtet, daß die Polymerisationslösung die HPLC-Säule um ca. 1 cm überdeckt. Die Eprouvetten wurden für 15 Minuten auf Tₚ und anschließend bei Raumtemperatur über Nacht gehalten. Die Eprouvetten wurden zerschlagen, das überschüssige Material entfernt und die Säulen mit Endfittings versehen. Anschließend wurde mit dem Mikroporogen (0,1 ml/min) für mehrere Stunden gespült.

### Beispiel A4: Herstellung nicht-funktionalisierter Monolithen - Einfluß der Temperatur

Das obige Beispiel wurde wiederholt, wobei die in der folgenden Tabelle 1 angegebenen Polymerisationstemperaturen eingehalten wurden:

**Tabelle 1:**

| **Einfluß der Temperatur auf die Monolithstruktur** | | | | |
|---|---|---|---|---|
| Monolith | 1 | 2 | 3 | 4 |
| Polymerisationstemperatur [°C] | 0 | 25 | 60 | 90 |
| Säulentemperatur | 0 | 0 | 0 | 0 |
| Teilchenstruktur | sphärisch | sphärisch | sphärisch | sphärisch |
| Durchmesser [µm] | 4-6 | 4-8 | 2-4 | 2-4 |
| Teilchendurchmesserverteilung | homogen | homogen | homogen | homogen |
| Kanäle [µm] | 8-30 | 4-20 | 8-35 | 8-35 |
| Bemerkungen | flexibel, sehr weich | flexibel | hart, spröde | hart, spröde |

Exemplarisch ist das IR-Spektrum des nicht funktionalisierten Monolithen 4 aufgeführt. Es zeigt folgende Signale:

| | |
|---|---|
| 2960 cm⁻¹, 2932 cm⁻¹, 2865 cm⁻¹ | aliphatische **C-H** |
| 3056 cm⁻¹, 1651 cm⁻¹, 967 cm⁻¹, 733 cm⁻¹ | allgemein **C=C** |
| 1452 cm⁻¹, 1341 cm⁻¹ | Alkane **C-H** |

### Beispiel A5: Herstellung nicht-funktionalisierter Monolithen - Einfluß von Polymerisationsparametern

Das obige Beispiel wurde wiederholt, wobei 1,4,4a,5,8,8a-Hexahydro-1,4,5,8*-exo-endo*-dimethano-naphthalin (Q I) als Quervernetzer verwendet wurde, und die in den folgenden Tabellen 2a bis 2c angegebenen Polymerisationsparameter eingehalten wurden:

**Tabelle 2a):**

| **Polymerisationsbedingungen nicht funktionalisierter Monolithen, Borsilikatsäule (3 x 50 mm), alle Angabe in Gewichtsprozenten** | | | | |
|---|---|---|---|---|
| Monolith | 5 | 6 | 7 | 8 |
| Norbornen | 0.15 | 0.2 | 0.25 | 0.3 |
| Quervernetzer (Q1) | 0.15 | 0.2 | 0.25 | 0.3 |
| Toluol | 0.1 | 0.1 | 0.1 | 0.1 |
| Isopropanol | 0.6 | 0.5 | 0.4 | 0.3 |
| Katalysator (1) | 0.004 | 0.004 | 0.005 | 0.004 |
| Polymerisationstemperatur [°C] | 0 | 0 | 0 | 0 |
| Säulentemperatur [°C] | 0 | 0 | 0 | 0 |
| Teilchenstruktur | sphärisch | sphärisch | sphärisch | sphärisch-verklebt |
| Durchmesser [µm] | 3-5 | 4-5 | 4-6 | 10-14 |
| Teilchendurchmesserverteilung | sehr homogen | sehr homogen | sehr homogen | breite Verteilung |
| Kanäle [µm] | 40-60 | 20-40 | 10-20 | keine |

**Tabelle 2b):**

| **Polymerisationsbedingungen nicht funktionalisierter Monolithen, Borsilikatsäule (3 x 50 mm), alle Angabe in Gewichtsprozenten** | | | | |
|---|---|---|---|---|
| Monolith | 9 | 10 | 11 | 12 |
| Norbornen | 0.35 | 0.35 | 0.3 | 0.35 |
| Quervernetzer (Q1) | 0.35 | 0.35 | 0.3 | 0.35 |
| Toluol | 0.1 | 0.1 | 0.2 | 0.2 |
| Isopropanol | 0.2 | 0.2 | 0.2 | 0.1 |
| Katalysator (1) | 0.004 | 0.013 | 0.004 | 0.004 |
| Polymerisationstemperatur [°C] | 0 | 0 | 0 | 0 |
| Säulentemperatur [°C] | 0 | -70 | 0 | 0 |
| Teilchenstruktur | sphärisch-verklebt | wabenformig homogen | ideal sphärisch | filmartig |
| Durchmesser [µm] | 16-40 | 0.6 | 4-6 | - |
| Teilchendurchmesserverteilung | breite Verteilung | extrem homogen | extrem homogen | - |
| Kanäle [µm] | keine | 2-4 | 20-60 | - |

**Tabelle 2c):**

| **Polymerisationsbedingungen nicht funktionalisierter Monolithen, Borsilikatsäule (3 x 50 mm), alle Angabe in Gewichtsprozenten** | | | | | |
|---|---|---|---|---|---|
| Monolith | 13 | 14 | 15 | 16 | 17 |
| Norbornen | 0 | 0.15 | 0.25 | 0.35 | 0.30 |
| Quervernetzer (Q1) | 0.5 | 0.35 | 0.25 | 0.15 | 0.30 |
| Toluol | 0.1 | 0.1 | 0.1 | 0.1 | 0.1 |
| Isopropanol | 0.4 | 0.4 | 0.4 | 0.4 | 0.3 |
| Katalysator (1) | 0.013 | 0.013 | 0.013 | 0.013 | 0.013 |
| Polymerisationstemperatur [°C] | 0 | 0 | 0 | 0 | 0 |
| Säulentemperatur [°C] | -70 | -70 | -70 | -70 | -70 |
| Teilchenstruktur | sphärisch | sphärisch | sphärisch | sphärisch | sphärisch |
| Durchmesser [µm] | 5-7 | 2-7 | 2-6 | 2-6 | 4-6 |
| Teilchendurchmesserverteilung | homogen | annähernd homogen | homogen | homogen | homogen |
| Kanäle [µm] | 10-40 | 7-40 | 7-40 | 10-40 | 5-20 |

InTabelle 2 sind exemplarisch die Polymerisationsbedingungen der Herstellung von Monolithen 5-17 angeführt. Des weiteren ist eine elektronenmikroskopische Aufnahme von Monolith 7 abgebildet (siehe Figur 2).

Mittels GPC wurde von den Monolithen 13-17 die spezifische Oberfläche ermittelt. Die spezifischen Oberflächen liegen zwischen 20-50 m²/g, wobei keine signifikanten Änderungen der spezifischen Oberfläche mit Variation des NBE / Q I gefunden wurde.

### Beispiel A6: Herstellung funktionalisierter Monolithen

Funktionalisierte Monolithen wurden analog zu den nicht-funktionalisierten hergestellt. Hierbei wurde nur ein zusätzlicher "in-situ"-Funktionalisierungsschritt angehängt: nach 1 h Polymerisationszeit (ab dem Zeitpunkt der Vereinigung der Polymerisationslösungen A + B gerechnet) wurde die HPLC-Säule mit Endfittings versehen und mit dem verwendeten Mikroporogen gespült (ca. 2 Säulenvolumina). Anschließend wurde eine 10 %-ige Lösung des gewünschten funktionellen Monomers in einem Lösungsmittel - welches nicht identisch mit dem verwendeten Mikroporogen sein muß - über die Säule geschickt. Die Säule wurde verschlossen und über Nacht bei 60°C gehalten. Es wurde mit 10 %-igem 1-n-hexenhältigem Acetonitril oder mit reinem Acetonitril endcappt. Für Monolithen 28-35 bestand Polymerisationslösung A aus NBE/Cl-1/2-Propanol (25 % / 25 % /40 %; m/m/m) und die Polymerisationslösung B aus Toluol und Initiator **2** (10 % / 0,01 %; m/m).

### Beispiel A7: Herstellung funktionalisierter Monolithen mit verschiedenen funktionellen Monomeren

Entsprechend der allgemeinen Herstellvorschrift für funktionalisierte Monolithen wurden verschiedene funktionalisierte Monolithen hergestellt, wobei die in der folgenden Tabelle 3 angegebenen funktionellen Monomere eingesetzt wurden:

**Tabelle 3:**

| **IR-Signale und Kapazitäten funktionalisierter Monolithen** | | | |
|---|---|---|---|
| **Monolith** | **Funktionelles Monomer** | **relevante IR-Signale** | **Kapazität [mequiv/g]** |
| **18** | 7-Oxanorborn-2-en-5-carbonsäure | 3460 cm⁻¹ (breit) COOH 1717 cm⁻¹ C=O von COOH | 0,14^{a} |
| **19** | *Endo,endo*-7-Oxanorborn-2-en-5,6-dicarbonsäureanhydrid | 1872 cm⁻¹ Anydrid (symmetrisch) 1794 cm⁻¹ Anydrid (asymmetrisch) | 0.2^{a} |
| **20** | *Exo,exo*-N-Phenyl-7-oxanorborn-2-en-5,6-dicarbonsäureimid | 1771 cm⁻¹, 1700 cm⁻¹ Imid | 0,22^{b} |
| **21** | *Exo,exo*-(4-Hydroxy-N-phenyl)-7-oxanorborn-2-en-5,6-dicarbonsäureimid | 3436 cm⁻¹ (breit) OH 1783 cm⁻¹, 1725 cm⁻¹ Imid 1501 aromatische C=C | 0,06^{b} |
| **22** | *Exo,exo*-N-(4-(N,N-Dimethylphenyl))-7-oxanorbom-2-en-5,6-dicarbonsäureimid | 1783 cm⁻¹, 1719 cm⁻¹ Imid 1615 cm⁻¹, 1522 cm⁻¹ aromatische C-H | 0.26^{b} |
| **23** | Norborn-2-en-5-carbonsäure-monocyclodextrinester | 3373 cm⁻¹ OH des Cyclodextrins 1746 cm⁻¹ Carbonylbande des Esters | |

| | | | |
|---|---|---|---|
| a) mittels Titration ermittelt | | | |
| b) mittels Elementaranalyse ermittelt | | | |

### Beispiel A8: Herstellung nicht-funktionalisierter µHPLC-Monolithen

Die Herstellung nicht-funktionalisierter µ-HPLC-Monolithen wurde analog zu den HPLC-Monolithen (siehe Beispiel A3) durchgeführt. Hierbei wurden jedoch sowohl Polymerisationslösungen A und B als auch die Kapillare auf -30°C vorgekühlt. Die Kapillare wurde während der Polymerisation mittels einer speziellen Vorrichtung für 15 Minuten gekühlt und anschließend bei RT weitere 15 Minuten gelagert. Anschließend wurde mit Acetonitril über Nacht entcappt und konditioniert. Für anschließende chromatographische Untersuchungen wurden nur die gekühlten Kapillarbereiche verwendet.

### Beispiel A9: Herstellung verschiedener nicht-funktionalisierter Monolithen - Einfluß von Polymerisationsparametern

Entsprechend der allgemeinen Herstellvorschrift für nicht-funktionalisierte Monolithen wurden verschiedene Monolithen hergestellt, wobei die in der folgenden Tabelle 4 angegebenen Polymerisationsparameter eingehalten und die angegebenen Ergebnisse erhalten wurden:

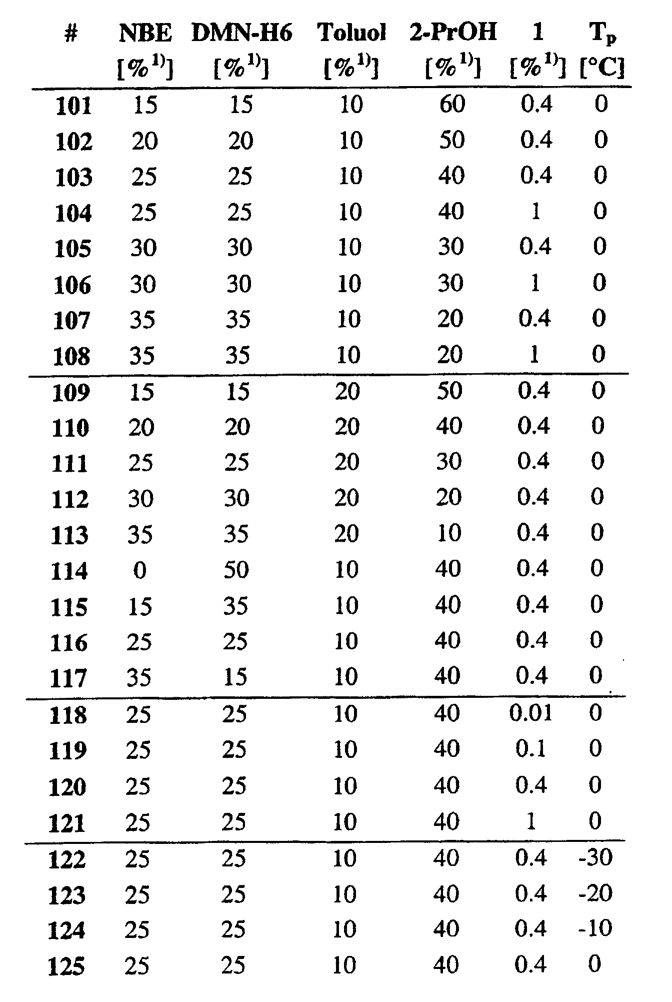

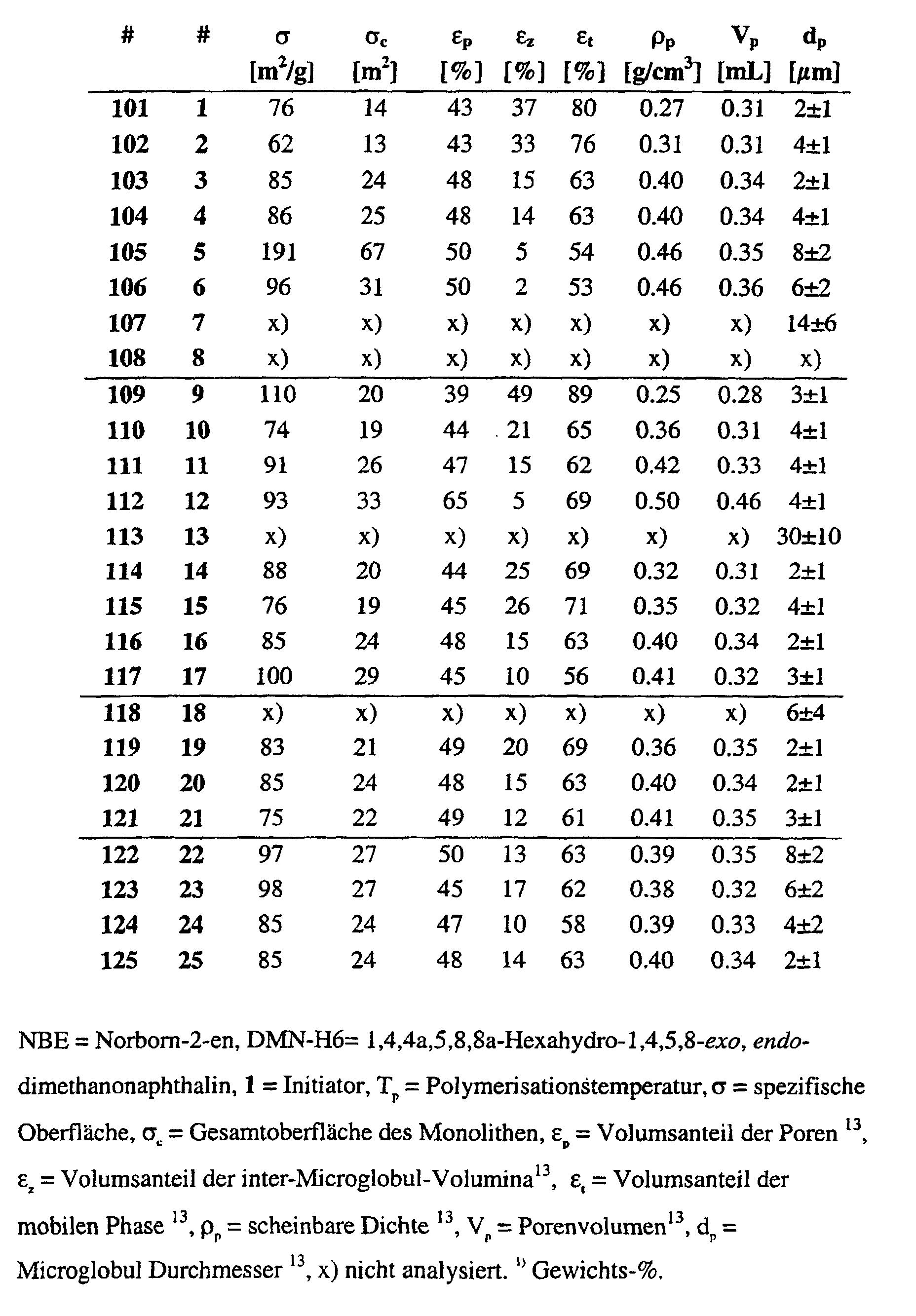

### Beispiel A10: Herstellung verschiedener funktionalisierter Monolithen - Einfluß von Polymerisationsparametern

Entsprechend der allgemeinen Herstellvorschrift für funktionalisierte Monolithen wurden verschiedene Monolithen hergestellt, wobei die in der folgenden Tabelle 5 angegebenen Polymerisationsparameter eingehalten und die angegebenen Ergebnisse erhalten wurden:

| **#** | **Monomer** | **Kapazität [mmol/g]** |
|---|---|---|
| **126** | Norbornen-2-carbonsäure | 0.2[a] (3.3 %)1) |
| **127** | Norbornen-2,3-dicarbonsäure | 0.14[a] (2.0 %)1) |
| **128** | N,N-(Norbornen-5,6-dicarboxyl)valine-N'-(3-nitrophenyl)amid | 0.03[b] (1.1 %)1) |
| **129** | N-Phenyl-7-oxanorbornen-2,3-dicarbimid | 0.22[b] (5.3 %)1) |
| **130** | N-(4-Hydroxyphenyl)-7-oxanorbornen-2,3-dicarbimid | 0.06[b] (1.5 %)1) |
| **131** | N-(4-dimethylaminophenyl)-7-oxanorbornen-2,3-dicarbimid | 0.26[b] (7.4 %)1) |

| | | |
|---|---|---|
| ^{a)} Bestimmt durch Titration, | | |
| ^{b)} bestimmt durch Elementaranalyse (% N). | | |

### Beispiel A11: Herstellung des Monolithen 132 (CLC-Monolith)

Entsprechend der allgemeinen Herstellvorschrift wurde ein Monolith (Monolith 132) hergestellt, wobei folgende Polymerisationsparameter eingehalten und die angegebenen Ergebnisse erhalten wurden:
NBE: 35 %; Cl-1: 35 %; Toluol 10 %; iso-Propanol: 20 %; Tₚ: -30 °C;
dₚ: 2 + 1 µm (Durchmesser); Dᵢₚ 10 + 5 µm (void)
(Erläuterungen siehe Beispiel A9)

### Zusammenfassung der Herstellbeispiele: Einfluß der Herstellparameter auf die Struktur des Monolithen

Im folgenden sind zusammenfassend einzelne Parameter aufgeführt, mit deren Hilfe die Monolithstruktur beeinflußt werden kann:

### Temperatur

Die Teilchengröße steigt von -70°C bis 0°C an, bleibt bis Raumtemperatur konstant und fällt bei weiterer Erhöhung der Temperatur auf 60°C wieder ab. Eine weitere Erhöhung der Polymerisationstemperatur auf 90°C hat keinen weiteren Effekt. Der Einfluß tiefer Temperaturen ist stark ausgeprägt, wie aus den Monolithen 8+17 bzw. 9+10 ersichtlich ist. Zwischen O°C und Raumtemperatur und zwischen 60°C und 90°C konnte kein Unterschied in der Teilchenstruktur gefunden werden. Auffällig ist jedoch die enorme Flexibilität des Monolithen 1, die mit zunehmender Polymerisierungstemperatur abnimmt. Monolith 3 ist durch eine hohe Sprödigkeit gekennzeichnet und bricht bei Belastung.

### Initiator

- Die Initiatorkonzentration in der Polymerlösung hat keinen signifikanten Einfluß auf die Monolithstruktur. Eine Erhöhung der Initiatormenge um den Faktor sechs führt zu keiner Veränderung des Teilchendurchmessers. Die eingesetzte Menge an Initiator ist aber für eine anschließende *in-situ* Funktionalisierung von entscheidender Bedeutung. Je höher die Konzentration des eingesetzten Initiators, desto mehr aktive Übergangsmetall-Carbene sind an der Oberfläche zum anschließenden Aufgraften des Selektors verfügbar.
- Es wurden Initiatoren **1** und **2** als ROMP-aktive Initiatoren auf ihre Verwendbarkeit zur Herstellung monolithischer Trennmaterialien untersucht. **2** erwies sich für die Verwendung von Norbornen, **Q I** und **Q II** als zu reaktionsträge, was sich in gelartigen Strukturen manifestiert. Diese filmartigen Strukturen sind flüssigkeitsundurchlässig und daher für die Verwendung als Trennmedium unbrauchbar. **1** erwies sich als gut geeignet für Norbornen, Dicyclopentadien, **Q I** und **II.** Norbornadien ist zu reaktiv, eine Überführung der Polymerisationslösung erwies sich als nicht möglich.

### M - Q - P - Verhältnisse

Eine ideale, nicht verklebte, sphärische Teilchenstruktur zwischen 0,6-10 µm kann durch die Variation des NBE / Q-Gehaltes, des Mikro- bzw. des Makroporenbildners erzielt werden, wobei die Durchmesserverteilung der erhaltenen Teilchen sehr eng und homogen ist. Des weiteren können auch Filme und wabenförmige Strukturen hergestellt werden.

### B Anwendungsbeispiele

### Beispiel B1: Gegendruck der Monolithen

Es wurden für die Monolithen 7 und 17 die Fluß-Druck-Kurven unter Verwendung von Wasser als Laufmittel aufgenommen. Es konnte gezeigt werden, daß hohe Flüsse bei niedrigen Gegendrücken erzielt werden, und daß die hergestellten Trennmaterialien nicht komprimierbar sind (lineare Beziehung des Druckes in Funktion des Flusses; Effektiver Druck = ausschließlich vom Monolithen aufgebauter Gegendruck).

Die Ergebnisse sind in Figur 3a) (Monolith 7) und 3b) (Monolith 17) dargestellt.

### Beispiel B2: Trennung dansylierter Aminosäuren mittels Monolith 7

Chromatographische Bedingungen: Borsilikatsäule (3 x 50 mm), Laufmittel: NaH₂PO₄/NaOH-Puffer pH: 9.5, 0.25 mM Tetrahepthyammoniumbromid (A), Acetonitril (B), Gradient: 0-1 min 99A/1B, 1-9 min auf 90A/10B (linear), 9-13 min auf 85A/15B (linear), Detektion: UV = 254 nm, Fluß: 1 ml/min

Die Ergebnisse sind in Figur 4 dargestellt.

### Beispiel B3: Proteintrennungen mittels Umkehrphasen-Chromatographie

Proteintrennung mittels Monolith 102 (Beispiel A9; 100 x 3 mm I.D.) mittels Umkehrphasen-Chromatographie: Chromatographische Bedingungen: Fluß: 18mm/sec, Laufmittel A: Acetonitiril + 0,1 % TFA, Laufmittel B: Wasser + 0,1 % TFA, Gradient: 0-0,2 min 21 % A auf 36 % A, auf 40 % A in 0,7 min, auf 55 % A in 1 min, UV (218 nm), Raumtemperatur, Analyten: (1) Ribonuclease A (2) Insulin (3) Cytochrom C (4) Lysozym (5) β-Lactoglobulin A (6) Myoglobin (7) α-Chymotrypsinogen A (8) Katalase

Proteintrennung mittels Monolith 124 (siehe Beispiel A9; Säule: 3 x 50 mm I.D.): Chromatographische Bedingungen: mobile Phasen: A: Acetonitril + 0,1 % TFA, B: Wasser + 0,1 % TFA, Gradient: 0-0,5 min 21 % A auf 36 %, auf 40 % A in 2,5 min und auf 55 % A in 3 min, Fluß: 6 mm/s, UV (218 nm), Raumtemperatur. Analyten: (1) Ribonuclease A (2) Insulin (3) Cytochrom C (4) Lysozym (5) β-Lactoglobulin A (6) Transferrin (7) Myoglobin (8) α-Chymotrypsinogen A (9) Katalase (10) Ovalbumin. V: 1 µl, c: (1-3), (5-8): 50 µg/ml (4,9): 100 µg/ml, (10): 200 µg/ml

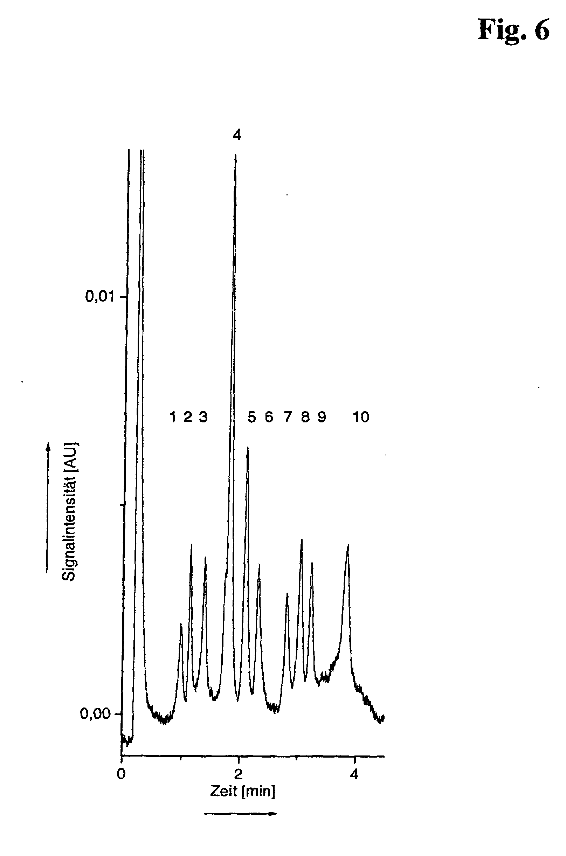

Die Ergebnisse sind in den Figuren 5 und 6 dargestellt.

### Beispiel B4: Oligonuceotidtrennung an Monolith 102

Oligonucleotidtrennung mittels Monolith 1022 (siehe Beispiel A9; 3 x 100 mm I.D). Chromatographische Bedingungen: V: 0,3 µl, c: 0,12 ppm, Fluß: 3mm/sec, (UV) 254 nm, Laufmittel A: 100 mM Triethylammoniumacetat, B: A+20 % ACN, linearer Gradient: 30-100 % B in 10 Minuten, Gradientendelay: 3,5 min, keine Basislinienkorrektur

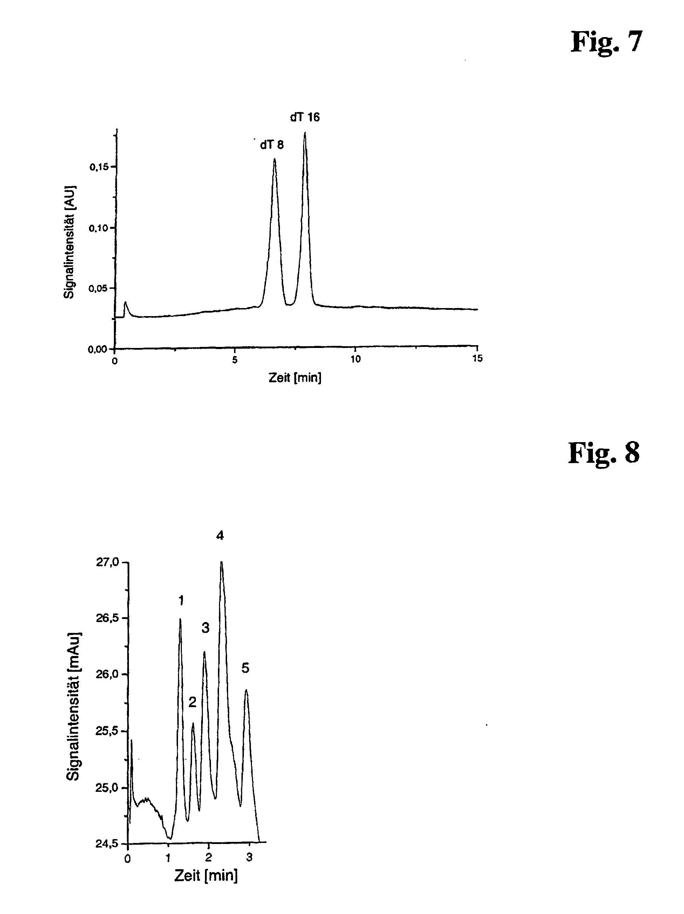

Die Ergebnisse sind in Figur 7 dargestellt.

### Beispiel B5: Vitamintrennung an Monolith 102

Trennung fettlöslicher Vitamine mittels Monolith 102, 100 x 3 mm I.D; siehe Beispiel A9. Chromatographische Bedingungen: Fluß: 21mm/sec, Laufmittel A: Acetonitril, Luafmittel B: Wasser + 0,05 M Ammoniumacetat, Gradient: 0-1,2 min von 15 % auf 50 % A, auf 70 % A in 1,7 min und auf 100 % A in 2,3 min, UV: (295 nm), Analyten: (1) Retinol-A-Säure, (2) Retinol, (3) Retinol-acetat, (4) Vitamin E, (5) Retinol-palmiat

Die Ergebnisse sind in Figur 8 dargestellt.

### Beispiel B6: Oligonucleotidtrennung

Trennung der Homooligonukleotide dT₁₂-dT₁₈ mittels Monolith 132 (siehe Beispiel A11). Chromatographische Bedingungen: Monolith 26, ⌀: 200 µm I.D. Länge: 6,75 cm, Fluß: ,6 µl/min, mobile Phase: A: 20% ACN + 0,1 M TEAA, pH6,9, B: ACN + 0,1 M TEAA, Gradient: 25-60 B in 10.Minuten, UV: (254 nm), c: 25 µg/ml, V: 20 µl. 1) _{d}T₁₂, 1) _{d}T₁₃, 1) _{d}T₁₄, 1) _{d}T₁₅, 1) _{d}T₁₆, 1) _{d}T₁₇, 1) _{d}T₁₈µ-Kapillarsäulen

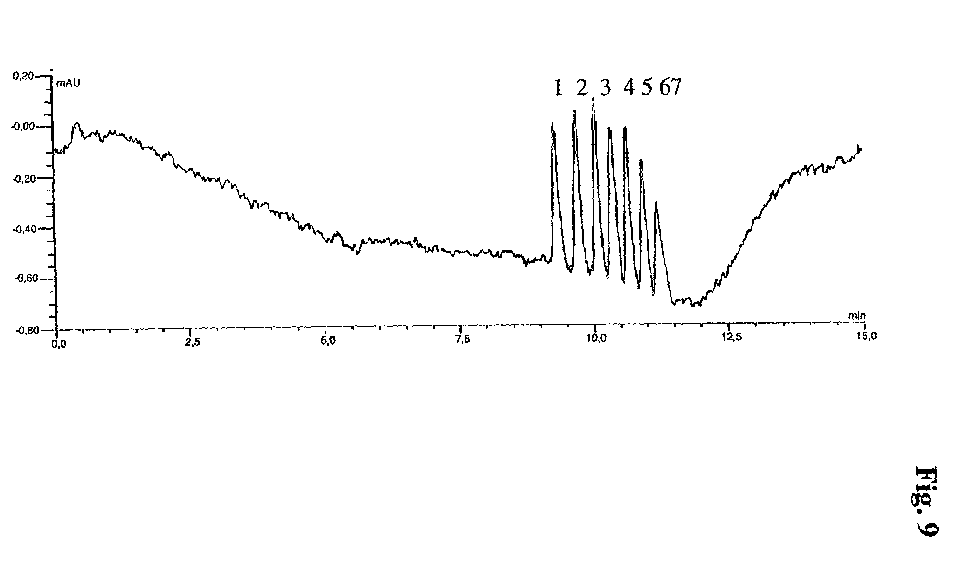

Die Ergebnisse sind in Tabelle 6 und Figur 9 dargestellt.

**Tabelle 6:**

| Peak | Halbwertsbreiten 1 | Auflösung |
|---|---|---|
| dT₁₂ | 0,11 | 2,36 |
| dT₁₃ | 0,1 | 2,08 |
| dT₁₄ | 0,1 | 1,46 |
| dT₁₅ | 0,13 | 1,46 |
| dT₁₆ | 0,1 | 1,6 |
| dT₁₇ | 0,12 | 1,17 |
| dT₁₈ | 0,15 | n.a. |

### Literaturverzeichnis

1. Hyun, M. H.; Min, S. C.; Cho, Y. J.; Na, M. S. *J. Liqu. Chromatogr.* **1995,** *18,* 2527-2541.
2. Alder, K.; Backendorf, K. H. *Ann. Chem.* **1938,** *535*, 101-113.
3. Lu, S.-Y.; Quayle, P.; Heatly, F.; Booth, C.; Yeates, S. G.; Padget, J. C. *Eur. Poly. J.* **1993,** *29*, 269-279.
4. Diels, O.; Alder, K. *Chem. Ber.* **1929**, *62,* 554.
5. Atzl, N. *Dissertation* **1997.**
6. Anderson, W. K.; Milowsky, A. S. *J. Org. Chem.* **1985,** *50*, 5423-5424.
7. Cava, M. P.; Deana, A. A.; Muth, K.; Mitchell, M. J. *Organic Synthesis;* John Wiley & Sons:, 1973; Vol. Collection V.
8. Hillmyer, M. A.; Lepetit, C.; McGrath, D. V.; Novak, B. M.; Grubbs, R. H. *Macromolecules* **1992**, *25*, 3345-3350.
9. Esquivel, J. B.; Sanchez, C.; Fazio, M. J. *J. Liq. Chrom. Rel. Technol.* **1998,** *21*, 777-791.
10. Buchmeiser, M. R.; Sinner, F. M.; Mupa, M.; Wurst, K. *Macromolecules* **2000.**
11. Stille, J. K.; Frey, D. A. *J. Am. Chem. Soc.* **1959,** *81*, 4273.
12. Benedicto, A. D.; Novak, B. M.; Grubbs, R. H. *Macromolecules* **1992**, *25*, 5893.
13. István, H.; Kolnél, M. *Angew. Chem.* **1978,** *7,* 954-961

## Patentansprüche

1. Monolithisches Trägermaterial erhältlich durch folgende Verfahrensschritte:
a) Bereitstellen eines formgebenden Gefäßes;
b) kovalente Bindung einer der Metathesepolymerisation zugänglichen Gruppe an besagtes formgebendes Gefäß;
c) Aufgolymerisation in Gegenwart von Porenbildner mittels eines Metatheseinitiators von der Metathesepolymerisation zugänglichen Monomeren und Quervernetzern auf das nach Schritt b) derivatisierte formgebende Gefäß.

2. Monolithisches Trägermaterial nach Anspruch 1, wobei das in Schritt c) genannte einer Metathesepolymerisation zugängliche Monomer ausgewählt ist aus Dicyclopentadien, Norbornadien, Hexahydrodimethanonaphthalin, Decahydrotrimethanoanthracen, Norborn-2-en, Cycloocten, Cyclooctadien, Cyclooctatrien und Cyclooctatetraen.

3. Monolithisches Trägermaterial nach Anspruch 1 oder 2, wobei anschließend an Schritt c) funktionelle Monomere aufpolymerisiert werden.

4. Monolithisches Trägermaterial nach Anspruch 3, wobei das funktionelle Monomer ausgewählt ist aus einfach oder doppelt mit C₁-C₁₈-Alkyl, C₁-C₁₈-Alkyloxy-, Aryl-, Aryloxy, C₁-C₁₈-Alkenyl-, C₁-C₁₈-Arylalkyl, C₁-C₁₈-Alkylaryl-, C₁-C₁₈-Arylalkenyl-oder eine Halogengruppe, C₁-C₁₈-Hydroxyalkyl, (poly)-Hydroxyphenyl, C₁-C₁₈-Hydroxyalkylaryl, C₁-C₁₈-Aminoalkyl, (C₁-C₁₈)-mono- oder di-(C₁-C₁₈-Alkyl)aminoalkyl, C₁-C₁₈-Cyanoalkyl, Cyanoaryl sowie eine Carboxylat- C₁-C₁₈- Alkylcarboxylat, C₁-C₁₈-Alkylcarboxyl, N,N-Dipyridylamin, N-C₁-C₁₈-Alkyl-N,N-dipyridylamin, N,N-Dipyridylcarbamid oder C₁-C₁₈-Alkyl-N,N-dipyridylcarbonsäureamid substituierten der Metathesepolymerisation zugänglichen Monomeren.

5. Verwendung eines monolithischen Trägermaterials mit den Merkmalen eines der Ansprüche 1 bis 4 als Sorbens für eine chromatographische Trennung.

6. Verfahren zur Herstellung eines monolithischen Trägermaterials umfassend folgende Verfahrensschritte:
a) Bereitstellen eines formgebenden Gefäßes;
b) kovalente Bindung einer der Metathesepolymerisation zugänglichen Gruppe an besagtes formgebendes Gefäß;
c) Aufpolymerisation mittels eines Metatheseinitiators von der Metathesepolymerisation zugänglichen Monomeren auf das nach Schritt b) derivatisierte formgebende Gefäß;

7. Verfahren nach Anspruch 6, wobei das in Schritt c) genannte einer Metathesepolymerisation zugängliche Monomer ausgewählt ist aus Dicyclopentadien, Norbornadien, Hexahydrodimethanonaphthalin, Decahydrotrimethanoanthracen, Norborn-2-en, Cycloocten, Cyclooctadien, Cyclooctatrien und Cyclooctatetraen.

## Revendications

1. Matériau support monolytique, pouvant être obtenu par les étapes suivantes :
a) mise à disposition d'un récipient définissant une forme ;
b) liaison covalente, audit récipient définissant une forme, d'un groupe apte à participer à une polymérisation par métathèse ;
c) polymérisation en présence d'un agent porogène, à l'aide d'un amorceur de métathèse, de monomères aptes à participer à une polymérisation par métathèse, et d'agents de réticulation croisée, sur le récipient définissant une forme, transformé en dérivé selon l'étape b).

2. Matériau support monolytique selon la revendication 1, dans lequel le monomère apte à participer à une polymérisation par métathèse et mentionné dans l'étape c) est choisi parmi le dicyclopentadiène, le norbornadiène, l'hexahydrodiméthanonaphtalène, le décahydrotriméthanoanthracène, le norborn-2-ène, le cyclooctène, le cyclooctadiène, le cyclooctatriène et le cyclooctatétraène.

3. Matériau support monolytique selon la revendication 1 ou 2, dans lequel l'étape c) est suivie d'une polymérisation de monomères fonctionnels.

4. Matériau support monolytique selon la revendication 3, dans lequel le monomère fonctionnel est choisi parmi les monomères aptes à participer à la polymérisation par métathèse, une ou deux fois substitués par un groupe alkyle en C₁₋₁₈, alkyloxy en C₁₋₁₈, aryle, aryloxy, alcényle en C₁₋₁₈, aryl-alkyle en C₁₋₁₈, (alkyl en C₁₋₁₈)aryle, aryl-alcényle en C₁₋₁₈ ou halogéno, hydroxyalkyle en C₁₋₁₈, (poly)hydroxyphényle, (hydroxyalkyl en C₁₋₁₈)aryle, aminoalkyle en C₁₋₁₈, mono- ou di-(alkyl en C₁₋₁₈) amino-alkyle en C₁₋₁₈, cyano-alkyle en C₁₋₁₈, cyanoaryle, ou carboxylate-(alkyl en C₁₋₁₈)carboxylate, (alkyle en C₁₋₁₈)carboxyle, N,N-dipyridylamine, N-(alkyl en C₁₋₁₈)-N,N-dipyridylamine, N,N-dipyridylcarbamide ou (alkyl en C₁₋₁₈)-N,N-dipyridylcarboxamide.

5. Utilisation d'un matériau support monolytique présentant les caractéristiques de l'une des revendications 1 à 4 en tant qu'agent adsorbant pour une séparation chromatographique.

6. Procédé de fabrication d'un matériau monolytique, Comprenant les étapes suivantes :
a) mise à disposition d'un récipient définissant une forme ;
b) liaison covalente, audit récipient définissant une forme, d'un groupe apte à participer à une polymérisation par métathèse ;
c) polymérisation, sur le récipient définissant une forme et transformé en dérivé selon l'étape b), à l'aide d'un amorceur de métathèse, de monomères aptes à participer à une polymérisation par métathèse.

7. Procédé selon la revendication 6, dans lequel le monomère apte à participer à une polymérisation par métathèse et mentionné dans l'étape c), est choisi parmi le dicyclopentadiène, le norbornadiène, l'hexahydrodiméthanonaphtalène, le décahydrotriméthanoanthracène, le norborn-2-ène, le cyclooctène, le cyclooctadiène, le cyclooctatriène et le cyclooctatétraène.

## Claims

1. A monolithic support material which can be obtained by the following process steps:
a) providing a shaping vessel;
b) covalent bonding of a group accessible to metathesis polymerisation to said shaping vessel; and
c) polymerisation in the presence of pore-forming agent by means of a metathesis initiator of cross-linkers and monomers accessible to metathesis polymerisation on to the shaping vessel derivatised in accordance with step b).

2. A monolithic support material according to claim 1 wherein the monomer accessible to metathesis polymerisation which is recited in step c) is selected from dicyclopentadiene, norbornadiene, hexahydrodimethanonaphthaline, decahydrotrimethanoanthracene, norborn-2-ene, cyclo-octene, cyclo-octadiene, cyclo-octatriene, and cyclo-octatetraene.

3. A monolithic support material according to claim 1 or claim 2 wherein functional monomers are polymerised on subsequently to step c).

4. A monolithic support material according to claim 3 wherein the functional monomer is selected from monomers which are accessible to metathesis polymerisation and which are singly or doubly substituted with C₁-C₁₈-alkyl, C₁-C₁₈-alkyloxy-, aryl-, aryloxy, C₁-C₁₈-alkenyl-, C₁-C₁₈-arylalkyl, C₁-C₁₈-alkylaryl-, C₁-C₁₈-arylalkenyl- or a halogen group, C₁-C₁₈-hydroxyalkyl, (poly)-hydroxyphenyl, C₁-C₁₈-hydroxyalkylaryl, C₁-C₁₈-aminoalkyl, (C₁-C₁₈)-mono- or di-(C₁-C₁₈-alkyl)aminoalkyl, C₁-C₁₈cyanoalkyl, cyanoaryl and a carboxylate-C₁-C₁₈-alkylcarboxylate, C₁-C₁₈-alkylcarboxyl, N,N-dipyridylamine, N-C₁-C₁₈-alkyl-N,N-dipyridylamine, N,N-dipyridylcarbamide or C₁-C₁₈-alkyl-N,N-dipyridyl carboxylic acid amide.

5. Use of a monolithic support material having the features of one of claims 1 to 4 as a sorbent for chromotographic separation.

6. A process for producing a monolithic support material including the following process steps:
a) providing a shaping vessel;
b) covalent bonding of a group accessible to metathesis polymerisation to said shaping vessel; and
c) polymerisation by means of a metathesis initiator of monomers accessible to metathesis polymerisation on to the shaping vessel derivatised in accordance with step b).

7. A process according to claim 6 wherein the monomer accessible to metathesis polymerisation which is recited in step c) is selected from dicyclopentadiene, norbornadiene, hexahydrodimethanonaphthaline, decahydrotrimethanoanthracene, norborn-2-ene, cyclo-octene, cyclo-octadiene, cyclo-octatriene, and cyclo-octatetraene.
